# EUROPÄISCHE PATENTSCHRIFT

(11) **EP 1 261 975 B1**
(45) Veröffentlichungstag und Bekanntmachung des Hinweises auf die Patenterteilung: **06.05.2004**
(21) Anmeldenummer: 01921291.9
(22) Anmeldetag: 28.02.2001
(51) Int. Cl.: H01B 19/00, H01B 17/32

(54) **Verfahren zur Herstellung eines nicht-zylindrischen Bauteils mit Verrippungsgliedern, insbesondere in Form eines Hochspannungsverbundisolators, dadurch erhältlicher Hochspannungsverbundisolator und Verwendung eines Silikonkautschuks mit zwei Vernetzungskatalysatoren bzw. -inhibitoren in dem Verfahren**
Method of producing a non-cylindrical component with ribs, particularly a high-voltage insulator, a thereby obtainable high-voltage insulator, and use of a silicon rubber having two curing catalysts or inhibitors, respectively
Procédé de réalisation d'une pièce non-cylindrique à nervures, en particulier d'un isolant à haute tension, un isolant à haute tension ainsi réalisable, et l'emploi d'un caoutchouc de silicone avec deux catalyseurs ou deux inhibiteurs d'enchaînement

(30) Priorität: 01.03.2000 CH 200040200; 27.06.2000 EP 00113561
(43) Veröffentlichungstag der Anmeldung: 04.12.2002
(73) Patentinhaber: Wermelinger AG, 6017 Ruswil (CH)
(72) Erfinder: WERMELINGER, Anton, CH-6017 Ruswil (CH)
(74) Vertreter: Lippich, Wolfgang, Dipl.-Phys, Dr.rer.nat.
(86) Internationale Anmeldenummer: PCT/EP2001/002260
(87) Internationale Veröffentlichungsnummer: WO 2001/065571

(56) Entgegenhaltungen:
- DE-A- 19 610 830
- GB-A- 1 471 083
- US-A- 4 312 123
- US-A- 4 724 284
- US-A- 5 641 831

## Beschreibung

### GEBIET DER ERFINDUNG

Die vorliegende Erfindung betrifft ein Verfahren zur Herstellung eines nicht-zylindrischen Bauteils mit Verrippungsgliedern insbesondee in Form eines Hochspannungsverbundisolators, einen durch diese Verfahren erhältlichen Hochspannungsverbundisolator und die Verwendung eines Silikonkautschuks mit zwei Vernetzungskatalysatoren bzw. -inhibitoren in dem Verfahren.

### HINTERGRUND DER ERFINDUNG

Der Begriff Hochspannung wird im Zusammenhang mit der Erfindung weit verstanden und bezieht sich auf Spannungen von mehr als 1000 Volt, wodurch er neben dem Hochspannungsbereich in engem Sinne auch den Mittelspannungsbereich umfasst.

Hochspannungsisolatoren sind mulitfunktionale Bauteile und dienen vorwiegend der elektrischen Isolierung im Hinblick auf Kriechstromstrecke, Durchschlagfestigkeit und Lichtbogenbeständigkeit. Mechanisch betrachtet übernehmen sie Zugkräfte, Druckkräfte, Biegung sowie auch Stützfunktionen, beispielsweise bei Hohlisolatoren für Schalter.

Im Stand der Technik sind Hochspannungskeramik-, -giessharzund -verbundisolatoren bekannt, wobei sich die letztgenannten mehr und mehr durchsetzen. Diese weisen typischerweise einen Verbund aus einem glasfaserverstärkten zylindrischen Stab (Vollkörper) oder Rohr (Hohlkörper) in ihrem Zentrum und einer Umkleidung aus Kunststoff, insbesondere Silikonkautschuk, auf. Die Umkleidung ihrerseits setzt sich in der Regel aus einem den Voll- oder Hohlkörper überziehenden Mantel sowie schuppenartig von diesem abstehenden Schirmen zusammen, welche dazu dienen, Regenwasser abzuweisen und den sog. Kriechweg, also die für den Kriechstrom kürzeste Strecke zwischen den beiden Enden des Stabes oder Rohrs, zu verlängern. Am Voll- oder Hohlkörper sind anwenderspezifische Endarmaturen befestigt. Die Kombination von Voll- oder Hohlkörper und Kunststoffmantel wird im folgenden einfachheitshalber "Kern" genannt.

Verbundisolatoren mit Kunststoff-, insbesondere Silikonumkleidungen werden insbesondere wegen zwei Eigenschaften bevorzugt: Erstens ist die Kunststoff-, insbesondere Silikonumkleidung sehr hydrophob, d.h. die Wasserabweisung der meist im Freien benutzten Isolatoren ist hoch, was eine Schmutzabweisung und damit geringe Kriechstromverluste begünstigt. Zweitens ist ihre Bauweise leicht, was die Montage erleichtert.

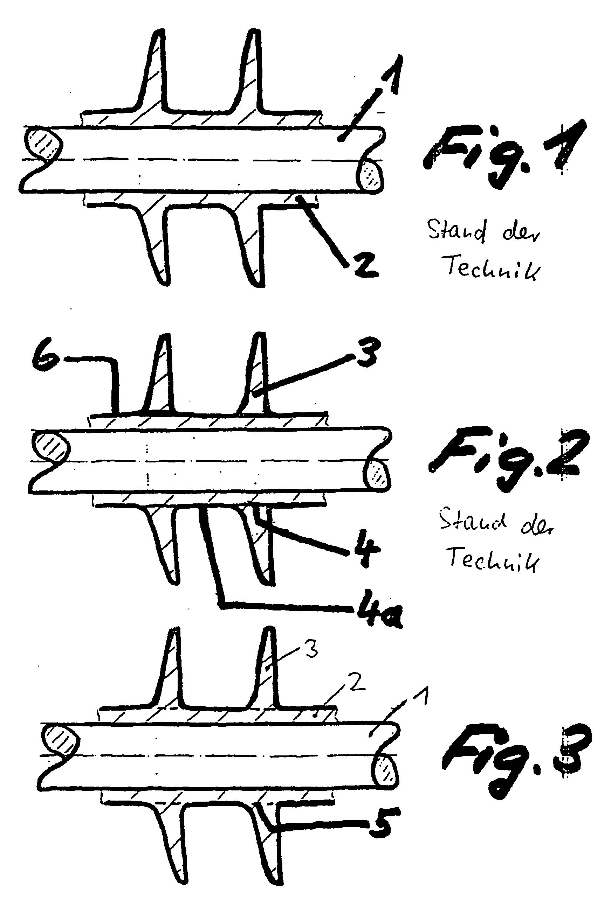

In der Praxis werden prinzipiell zwei Verfahren zur Herstellung von Verbundisolatoren verwendet:
a) die sogenannte Ein-Verguss-Umhüllung (siehe Figur 1). Bei diesem Verfahren werden der Mantel und die Schirme (die Umkleidung) 2 in einem Arbeitsgang mit einer in Längsrichtung teilbaren Gußform auf einen Voll- oder Hohlkörper 1 gegossen. Nachteilig ist dabei aber die relativ niedrige Flexibilität bei der Herstellung unterschiedlicher Isolatorformen. Außerdem können mit diesem Verfahren keine Hinterschneidungen, wie z.B. Rillen an den Schirmen, gegossen werden, wenn nicht mehrteilige Formen verwendet werden, die jedoch den Herstellungsaufwand erheblich erhöhen;
b) ein mehrstufiges Herstellungsverfahren (siehe Figur 2). Darin wird ein Mantel 6 auf den Voll- oder Hohlkörper gegossen oder extrudiert, getrennt davon werden Schirme 3 vorgefertigt, in der Regel durch ein Spritzguss- oder Pressverfahren, und diese werden dann über den Kern gezogen und mit einem Klebstoff auf demselben befestigt.

Das Verfahren b) gestattet eine wesentlich flexiblere Herstellung als das Verfahren a), ist aber noch nicht als optimal anzusehen. Die Klebfugen 4 zwischen Schirm und Kern sind nachweislich elektrisch erodierende Problemstellen, ebenfalls eventuell verbleibender Klebstofffilm 4a auf dem Kern zwischen den Schirmen. Weiter ist es insofern unökonomisch, als der Klebstoff in speziellen Arbeitsgängen aufgetragen werden muß und die überschüssigen Rückstände nach dem Setzen der Schirme aus den erwähnten elektrischen Gründen manuell sauber entfernt werden müssen.

Die DE 196 10 830 A1 offenbart ein Verfahren zur Herstellung von Hochspannnugsisolatoren mit den Schritten: Anordnen einer aus nicht ausgehärteten polymeren Materialien gefertigten Umhüllung an der Außenfläche eines Kernelements, Anordnen einer Vielzahl von aus ausgehärteten polymeren Materialien an der Außenfläche der Umhüllung und Aushärten der Umhüllung, um diese mit den Glocken zu Verbinden. Alternativ sind sowohl die Materialien der Umhüllung als auch diejenigen der Glocken ausgehärtet, und die Verbindung der beiden wird unter Verwendung von Klebemitteln bewerkstelligt.

Im US-Patent 4,312,123 wird ein nicht-vulkanisierter Mantel um einen Kern herum angeordnet, dann werden zumindest teilweise vulkanisierte Schirme entlang demselben angebracht, und die Anordnung wird vulkanisiert.

Im Verfahren des US-Patentes 4,724,284 zur Herstellung eines Hochspannungsisolators werden Schirme mittels eines Dichtungsmaterials auf einem nicht-vulkanisierten Mantel aufgebracht. Anschließend wird die Anordnung vulkanisiert.

Das US-Patent 5,641,831 offenbart ein vulkanisierbares Silikonpolymer, das einen "Niederdruck"- und einen "Hochdruck"-Peroxidkatalysator für ein Zweistufen-Vulkanisationsverfahren enthält. Die beiden Katalysatoren verursachen eine Vernetzung bei unterschiedlichen Temperaturen, wobei der Katalysator, der bei niedriger Temperatur reagiert, nur eine Teilvernetzung bewirkt, und der Katalysator, der bei höherer Temperatur reagiert, für eine vollständige Vernetzung sorgt. Eine Verwendung in einem nicht-zylindrischen Bauteil mit Verrippungsgliedern, insbesondere einem Hochspannungsisolator, ist nicht erwähnt.

In der GB 1 471 083 ist ein Silikonkautschuk offenbart, der zwei Katalysatoren enthält, die unabhängig voneinander. aktiviert werden können, beispielsweise einer durch Wärme und der anderer durch Licht, wobei einer der Katalysatoren in einer Menge vorliegt, die nicht zur vollständigen Härtung des Produkts ausreicht. Eine Verwendung in einem in einem nicht-zylindrischen Bauteil mit Verrippungsgliedern, insbesondere einem Hochspannungsisolator, ist nicht erwähnt.

Die Aufgabe der Erfindung besteht demgemäss darin, ein flexibles Verfahren zur Herstellung von Hochspannungsverbundisolatoren bereitzustellen , welches das Erfordernis des Verklebens von Mantel und Schirm vermeidet. Dazu gehört auch die Bereitstellung eines zugehörigen Produkts, eines entsprechenden Werkstoffes sowie eines allgemeinen Verfahrens.

### KURZFASSUNG DER ERFINDUNG

Gemäß einem Aspekt ist die Erfindung auf eine Verfahren gerichtet zur Herstellung eines nicht-zylindrischen Bauteils mit einem langgestreckten zentralen Voll- oder Hohlkörper, einem Mantel aus Kunststoff und einem oder mehreren Verrippungsgliedern aus Kunststoff. Das Verfahren umfaßt folgende Schritte: der Mantel aus Kunststoff wird durch Giessen oder Extrudieren auf den Voll- oder Hohlkörper aufgebracht; die Verrippungsglieder aus Kunststoff werden geformt; wobei der Kunststoff des Mantels und/oder der Kunststoff der Verrippungsglieder teilweise vernetzt wird bzw. werden und gegebenenfalls der nicht teilweise vernetzte Kunststoff des Mantel oder der Verrippungsglieder im wesentlichen vollständig vernetzt wird. Das Verfahren umfaßt folgende weitere Schritte: die Verrippungsglieder werden auf einem vorgesehenen Platz auf dem Mantel angeordnet; und die so gebildete Zusammenstellung wird vollständig vernetzt.

Die Erfindung betrifft in einem weiteren Aspekt ein Verfahren zur Herstellung eines Hochspannungsisolators mit einem langge-streckten zentralen Voll- oder Hohlkörper, einem Mantel aus Kunststoff und einem oder mehreren Schirmen aus Kunststoff, mit den folgenden Schritten: der Mantel aus Kunststoff wird durch Giessen oder Extrudieren auf den Voll- oder Hohlkörper aufgebracht; die Schirme aus Kunststoff werden geformt; wobei der Kunststoff des Mantels und/oder der Kunststoff der Schirme teilweise vernetzt wird bzw. werden und gegebenenfalls der nicht teilweise vernetzte Kunststoff des Mantels oder der Schirme im wesentlichen vollständig vernetzt wird. Als weitere Schritte werden die Schirme werden auf einem vorgesehenen Platz auf dem Mantel angeordnet; und das so gebildete Hochspannungsisolator-Vorprodukt wird vollständig vernetzt.

Gemäß einem anderen Aspekt stellt die Erfindung einen Hochspannungsisolator mit einem langgestreckten zentralen Voll- oder Hohlkörper, einem Mantel aus Kunststoff und einem oder mehreren Schirmen bereit, wobei der Hochspannungsisolator nach dem Verfahren nach dem obigen Verfahren erhältlich ist.

Gemäß noch einem weiteren Aspekt ist die Erfindung auf die Verwendung eines Silikonkautschuks in dem obigen Verfahren gerichtet. Der Kunststoff enthält mindestens zwei bei verschiedenen Temperaturen reagierende Vernetzungskatalysatoren oder mindestens zwei verschiedene, eine Additionsreaktion bis zu verschiedenen Temperaturen hemmende Inhibitoren.

In den Unteransprüchen sind Konkretisierungen und vorteilhafte Ausgestaltungen angegeben.

### BESCHREIBUNG DER ZEICHNUNGEN

Figur 1 ist eine Querschnittansicht eines Teils eines Hochspannungsverbundisolators nach dem Stand der Technik, dessen Umkleidung einstückig hergestellt ist.

Figur 2 ist eine Querschnittsansicht eines Teils eines Hochspannungs-Verbundisolators nach dem Stand der Technik mit auf dem Mantel aufgeklebtem Schirm und Klebfuge.

Figur 3 ist eine schematische Querschnittsansicht eines Teils eines Ausführungsbeispiels eines erfindungsgemäßen Hochspannungs-Verbundisolators mit zweistückig gefertigter Umkleidung ohne Klebfuge.

### BESCHREIBUNG DER BEVORZUGTEN AUSFÜHRUNGSFORMEN

Im folgenden werden Ausführungsbeispiele anhand von Fig. 3 näher beschrieben.

Der Verbundisolator weist einen elektrisch isolierenden, langgestreckten zentralen Körper 1 auf, der zumindest Zugkräfte aufnehmen kann und z.B. die Form eines Stabes oder Rohres hat. Er ist beispielsweise aus glasfaserverstärktem Kunststoff gefertigt. Auf den Körper 1 ist ein dünner Mantel 2 z.B. aus Silikonkautschuk aufextrudiert. Auf den Mantel 2 sind Schirme 3 aufgesetzt, die in Radialrichtung oder einem spitzen Winkel hierzu auskragen. Diese sind z.B. im Spritzguss- oder Pressverfahren vorproduziert. Der Mantel 2 und die Schirme 3 sind an den längs des Umfangs verlaufenden Berührflächen 5 chemisch miteinander verbunden, wie unten noch näher erläutert wird. Die Schirme 3 können zur Verlängerung des Kriechweges auf einer oder beiden Seiten Verrippungen oder Rillen aufweisen.

Durch die Verbindung von bündig, d.h. ohne Zwischenraum aufeinanderliegenden Kunststoffmantel und Kunststoffschirmen des Isolators, von denen mindestens einer nur teilweise vernetzt (anvulkanisiert) ist und gegebenenfalls der andere im wesentlichen vollständig vernetzt ist, mittels vollständiger Vernetzung (Vulkanisation), wie in der Kurzfassung der Erfindung beschrieben, sind sehr stabile kovalente chemische Bindungen zwischen Mantel und Schirm erzielbar. Dies gilt für den Fall der teilweisen Vernetzung beider Umkleidungskomponenten ganz offensichtlich. Aber auch bei im wesentlichen vollständiger Vernetzung einer der Umkleidungskomponenten ist eine chemische kovalente Verbindung zwischen anvulkanisierter und durchvulkanisierter Umkleidungkomponente möglich, da auch bei einem durchvulkanisierten Kunststoff in der Regel in der Nähe der Oberfläche noch genügend reaktive Gruppen vorhanden sind, um unter der Einwirkung des verbleibenden Vernetzungskatalysators des anvulkanisierten Kunststoffs mit diesem stabile chemische Bindungen einzugehen, wie dies beispielsweise dem Fachmann auf dem Gebiet der Kunststoffklebstoffe wohlbekannt ist. In beiden Fällen wird also eine in physikalischer Hinsicht homogene Umkleidung ohne elektrische Fugen gebildet.

Ein bevorzugter Kunststoff zur Verwendung in dem erfindungsgemäßen Verfahren ist Silikonkautschuk. Deshalb wird die anschließende Beschreibung des Verfahrens vorwiegend an Hand von Silikonkautschuk vorgenommen. Es versteht sich aber, dass die Erfindung nicht auf Silikonkautschuk beschränkt ist, sondern alle isolierenden Kunststoffe einschliesst, z.B. Polyethylen, Ethylen-Ethylacrylat-Copolymer, Ethylen-Vinylacetat-Copolymer, Ethylen-Propylen-Copolymer (EPM), Ethylen-Propylen-Dien-Terpolymer (EPDM), chlorsulfoniertes Polyethylen, Polypropylen, Butylacrylat-Glycidylmethacrylat-Copolymer, Polybuten, Butylkautschuke und ionomere Polymere.

Prinzipiell kann die Kunststoffvernetzung auf jegliche bekannte Weise, einschliesslich Strahlungsvernetzung, durchgeführt werden. Bevorzugt wird sie aber mittels eines Katalysators vorgenommen.

Die teilweise Kunststoffvernetzung des Verfahrens der Erfindung kann ebenfalls mittels dosierter Strahlung oder mittels eines einzigen Vernetzungskatalysator oder, bei durch Additionsreaktion vernetzenden Silikonkautschuken, mittels eines einzigen Inhibitors durchgeführt werden, indem Reaktionszeit und - temperatur geeignet gewählt werden. Bevorzugt werden jedoch mindestens zwei Vernetzungskatalysatoren mit verschiedenen Reaktionstemperaturen verwendet. In diesem Fall wird der Katalysator mit der niedrigsten Reaktionstemperatur bevorzugt in einer Menge eingesetzt, die nicht ausreicht, um den Kunststoff vollständig zu vernetzen; und der oder die Katalysator(en) mit höherer Reaktionstemperatur wird bzw. werden bevorzugt nur in einer solchen Menge eingesetzt, die gerade ausreicht, um in Kombination mit dem Katalysator mit der niedrigsten Reaktionstemperatur den Kunststoff vollständig zu vernetzen. Die speziellen Mengen dieser Vernetzungskatalysatoren hängen von der Art des Katalysators und des Kunststoffs ab und können durch Routineversuche bestimmt werden. Die teilweise vernetzte oder anvulkanisierte Umkleidungskomponente sollte eine gute Handhabung ermöglichen und Formstabilität aufweisen. Die Menge des oder der bei höherer Temperatur reagierenden Katalysators bzw. Katalysatoren kann aus der Kenntnis des bei niedrigerer Temperatur reagierenden Katalysators berechnet oder durch einfache Versuche ermittelt werden. Im Fall von durch Additionsreaktion vernetzendem Silikonkautschuk werden mindestens zwei verschiedene, die Vernetzungsreaktion bis zu verschiedenen Temperaturen hemmende Vernetzungsinhibitoren eingesetzt.

Bei radikalisch vernetzendem Silikonkautschuk handelt es sich bevorzugt um Poly(dimethyl-methylvinly-siloxan), insbesondere das von der Wacker Chemie unter der eingetragenen Marke "Powersil 310" vertriebenene, das eine Poly(dimethylmethylvinyl-siloxan) mit hochdisperser Kieselsäure als verstärkendem Füllstoff und Aluminium-Trihydrat zur Erhöhung der Kriechstromfestigkeit ist.

Für eine Teilvernetzung (Anvulkanisation) werden dem oben beschriebenen Silikonkautschuk bevorzugt mindestens zwei bei verschiedenen Temperaturen zerfallende Radikal-Katalysatoren zugesetzt. Bevorzugt werden Peroxid-Katalysatoren, insbesondere Bis(2,4-dichlorbenzoylperoxid) (50%ig in Silkonöl, "Vernetzer E" der Wacker Chemie), das bei 90°C zu reagieren beginnt, und 2,5-Bis(ter.-butylperoxy)-2,5-dimethylhexan (45%ig in Silikonkautschuk; "Vernetzer C6" der Wacker Chemie), das bei 170-190°C reagiert.

Die speziell verwendeten Mengen der bei unterschiedlichen Temperaturen reagierenden Radikal-Katalysatoren hängen von deren Natur und vom verwendeten Kautschuk ab und können vom Fachmann leicht durch einfache Versuche unter Berücksichtigung der oben gegebenen allgemeinen Beschreibung ermittelt werden. Für eine Anvulkanisation wird z.B. der Vernetzer E in einer Menge von weniger als etwa 1,5 Gew.%, bezogen auf Silikonkautschuk, eingesetzt, und für die anschliessende Durchvulkanisation wird z.B. der Vernetzer C6 in einer Menge von weniger als etwa 0,6 Gew.%, bezogen auf Silikonkautschuk, eingesetzt.

Bei dem durch Additionsreaktion vernetzenden Silikonkautschuk handelt es sich bevorzugt um Poly(dimethyl-vinylmethylsiloxan), dem bevorzugt ein Hydrogensiloxan, z.B. Poly(dimethyl-hydrogenmethyl-siloxan), beigemischt ist. Die bevorzugten Katalysatoren sind Platin-Katalysatoren. Um eine teilweise Vernetzung durchzuführen, werden dem Silkonkautschuk mindestens ein Inhibitor, bevorzugt mindestens zwei Inhibitoren für die Additionsreaktion zugesetzt.

Die Menge der Inhibitoren steuert die sogenannte Anspringtemperatur, bei der bei gegebenem Inhibitor die Reaktion dann tatsächlich eingeleitet wird. Der Inhibitor, der für die niedrigste Anspringtemperatur sorgen soll, wird bevorzugt in einer Menge eingesetzt, die eine Anspringtemperatur bewirkt, die niedrig genug ist, dass der Silikonkautschuk nicht vollständig vernetzt wird; und der oder die Inhibitor(en), die für die höhere Anspringtemperatur sorgen sollen, werden in einer solchen Menge eingesetzt, dass die vollständige Vernetzung bei einer Temperatur im gewünschten Temperaturabstand erfolgt. Die speziellen Mengen dieser Anspringkatslysatoren hängen von der Art des Inhibitors und des Silikonkautschuks ab und können, analog wie oben bei den Vernetzungskatalysatoren beschrieben, vom Fachmann durch Routineversuche bestimmt werden.

Beispiele für Inhibitoren sind Vinyl-methyl-siloxan (1:3) (unter der Bezeichnung PT 67 von der Wacker Chemie erhältlich) (übliche Einsatzmenge bei alleiniger Verwendung 0,5 bis 0,75 Gew.%, bezogen auf Silikonkautschuk) und eine 5%ige Lösung von Ethinylcyclohexanol in Silikonöl (unter der Bezeichnungn PT88 von der Wacker Chemie erhältlich) (übliche Einsatzmenge bei alleiniger Verwendung 0,25 bis 0,5 Gew.%, bezogen auf Silikonkautschuk).

Falls eine der Umkleidungskomponenten im erfindungsgemäßen Verfahren bereits zu Beginn durchvulkanisiert wird, kann jeder für das spezielle Herstellungsverfahren (z.B. Giessen, Extrudieren, Spritzgiessen oder Pressformen) geeignete Katalysator verwendet werden. Diese Katalysatoren sind dem Fachmann wohlbekannt und die oben genannten Katalysatoren E, C6 und Platinkatalysatoren fallen darunter.

Das offenbarte Verfahren ist nicht etwa nur für die genannten Hochspannungsverbundisolatoren geeignet, sondern kann vorteilhaft für alle in ähnlicher Art geformte Körper Anwendung finden. Entsprechend nennt die Kurzfassung der Erfindung auch ein Verfahren zur Herstellung nicht-zylindrischer Bauteile, die einen langgestreckten Voll- oder Hohlkörper, einen (vorzugsweise zylindrische) Kunststoffmantel und mehrere Kunststoffverrippungsglieder aufweisen. Bei diesen Bauteilen kann es sich beispielsweise um Schläuche oder Rohre handeln, an deren Aussenseite sich z.B. Verstärkungs-, Abstützungs- oder Befestigungselemente befinden. Der Verfahrensablauf entspricht dem des vorbeschriebenen Verfahrens zur Herstellung eines Hochspannungsverbundisolators und umfaßt vorteilhaft auch dessen Ausgestaltungen.

In einem konkreten Beispiel für die Herstellung eines Hochspannungsverbundisolators wird ein Mantel aus dem oben beschriebenen Silikonkautschuk "Powersil 310" mit einem einzigen Peroxid-Vernetzer auf einen Stab extrudiert und weitgehend vernetzt. Schirme mit einer nicht zur vollständigen Vulkanisation ausreichenden Menge des oben beschriebenen Vernetzers E und einer zur Durchvulkanisation benötigten Menge des oben beschriebenen Vernetzers C6 werden bei 140°C gespritzt und dabei anvulkanisiert. Der Kern wird mit bündig aufliegenden Schirmen bestückt, und es wird eine Durchvulkanisation in einem Vulkanisationsofen bei 170°C vorgenommen. Es resultiert eine stabile Verbindung zwischen Mantel und Schirmen.

Der allgemeine Zweck der offenbarten Ausführungsformen ist somit die Bereitstellung eines verbesserten Verfahrens zur Herstellung eines Hochspannungsisolators oder, allgemeiner, eines nicht-zylindrischen Bauteils, eines entsprechend hergestellten Hochspannungsisolators sowie eines Kunststoffs hierfür.

## Patentansprüche

1. Verfahren zur Herstellung eines nicht-zylindrischen Bauteils mit einem langgestreckten zentralen Voll- oder Hohlkörper, einem Mantel aus Kunststoff und einem oder mehreren Verrippungsgliedern aus Kunststoff mit den folgenden Schritten:
- der Mantel aus Kunststoff wird durch Giessen oder Extrudieren auf den Voll- oder Hohlkörper aufgebracht;
- die Verrippungsglieder aus Kunststoff werden geformt;
wobei der Kunststoff des Mantels und/oder der Kunststoff der Verrippungsglieder teilweise vernetzt wird bzw. werden und gegebenenfalls der nicht teilweise vernetzte Kunststoff des Mantel oder der Verrippungsglieder im wesentlichen vollständig vernetzt wird,
- die Verrippungsglieder werden formschlüssig auf einem vorgesehenen Platz auf dem Mantel angeordnet; und
- die so gebildete Zusammenstellung wird vollständig vernetzt.

2. Verfahren nach Anspruch 1 zur Herstellung eines nicht-zylindrischen Bauteils in Form eines Hochspannungsisolators Hochspannungsisolators mit einem langgestreckten zentralen Voll- oder Hohlkörper (1), einem Mantel aus Kunststoff (6) und einem oder mehreren Verrippungsgliedern in Form von Schirmen (3) aus Kunststoff mit den folgenden Schritten:
- der Mantel (6) aus Kunststoff wird durch Gießen oder Extrudieren auf den Voll- oder Hohlkörper aufgebracht;
- die Schirme (3) aus Kunststoff werden geformt;
wobei der Kunststoff des Mantels (6) und/oder der Kunststoff der Schirme (3) teilweise vernetzt wird bzw. werden und gegebenenfalls der nicht teilweise vernetzte Kunststoff des Mantels (6) oder der Schirme (3) im wesentlichen vollständig vernetzt wird,
- die Schirme (3) werden auf einem vorgesehenen Platz auf dem Mantel (6) angeordnet; und
- das so gebildete Hochspannungsisolator-Vorprodukt wird vollständig vernetzt.

3. Verfahren nach Anspruch 1 oder 2, bei dem sowohl der Kunststoffe des Mantels als auch der Kunststoff der Verrippungsglieder bzw. Schirme Silikonkautschuk umfassen.

4. Verfahren nach einem der Ansprüche 1 bis 3, bei dem der Kunststoffe des Mantels und der Kunststoff der Verrippungsglieder bzw. Schirme identisch sind.

5. Verfahren nach einem der Ansprüche 1 bis 4, bei dem sowohl der Kunststoff des Mantels als auch der Kunststoff der Verrippunggsglieder bzw. Schirme mindestens einen Vernetzungskatalysator enthalten.

6. Verfahren nach einem der Ansprüche 1 bis 5, bei dem der teilweise zu vernetzende Kunststoff mindestens zwei Vernetzungskatalysatoren enthält, die bei verschiedenen Temperaturen reagieren.

7. Verfahren nach Anspruch 6, bei dem ein bei einer niedrigsten Temperatur reagierender Vernetzungskatalysator in einer Menge eingesetzt wird, die nicht ausreicht, um den Kunststoff vollständig zu vernetzen.

8. Verfahren nach Anspruch 7, bei dem ein oder mehrere bei einer höheren Temperatur reagierende Vernetzungskatalysatoren in einer Menge eingesetzt werden, die gerade ausreicht, um die auf die teilweise Vernetzung folgende vollständige Vernetzung zu bewirken.

9. Verfahren nach einem der Ansprüche 3 bis 8, bei der Kunststoff des Mantels und/oder der Kunststoff der Verrippungsglieder bzw. Schirme einen durch Radikal-Katalyse vernetzenden Kunststoff, insbesondere Poly(dimethyl-methylvihyl-siloxan), umfassen, der mindestens einen, bevorzugt zwei, Radikal-Katalysatoren, insbesondere Peroxid-Katalysatoren, enthält.

10. Verfahren nach einem der Ansprüche 6 bis 9, bei dem ein Radikal-Katalysator mit einer niedrigeren Zerfallstemperatur Bis(2,4-dichlorbenzoyl)peroxid ist und ein Radikal-Katalysator mit einer höheren Zerfallstemperatur 2,5-Bis(tert.-butylperoxy)-2,5-dimethylhexan ist.

11. Verfahren nach einem der Ansprüche 1 bis 5, bei dem ein oder beide Kunststoffe einen durch Additionsreaktion vernetzenden Kunststoff umfassen, der mindestens einen Additions-Katalysator, bevorzugt Platin-Katalysator, und mindestens einen Inhibitor für die Additionsreaktion enthält.

12. Verfahren nach Anspruch 11, bei dem der durch Additionsreaktion vernetzende Kunststoff (Poly(dimethyl-methylvinyl-siloxan) umfasst.

13. Verfahren nach Anspruch 12, bei dem der durch Additionsreaktion vernetzende Kunststoff weiter ein Hydrogensiloxan, insbesondere Poly(dimethyl-hydrogenmethylsiloxan) umfasst.

14. Verfahren nach einem der Ansprüche 11 bis 13, bei dem der Kunststoff mindestens zwei verschiedene, eine Additionsreaktion bis zu verschiedenen Temperaturen (Anspringtemperaturen) hemmende Inhibitoren enthält.

15. Verfahren nach Anspruch 14, bei dem die mindestens zwei Inhibitoren Vinyl-methyl-siloxan (1:3) und Ethinylcyclohexanol umfassen.

16. Verfahren nach Anspruch 14 oder 15, bei dem ein Inhibitor mit der niedrigsten Anspringtemperatur in einer Menge zugesetzt ist, die nicht ausreicht, um den Kunststoff vollständig zu vernetzen.

17. Verfahren nach einem der Ansprüche 1 bis 16, bei dem Kunststoffabdichtungen für am Ende des zentralen Volloder Hohlkörpers angebrachte Armaturen auf gleich Weise wie die Schirme aufgebracht werden.

18. Hochspannungsisolator mit einem langgestreckten zentralen Voll- oder Hohlkörper (1), einem Mantel aus Kunststoff (6) und einem oder mehreren Schirmen (3), erhältlich nach dem Verfahren nach einem der Ansprüche 6 bis 8, 10 und 14 bis 16 mit Rückbezug auf Anspruch 3.

19. Hochspannungsisolator mit einem langgestreckten zentralen Voll- oder Hohlkörper (1), einem Mantel aus Kunststoff (6) und einem oder mehreren Schirmen (3), erhältlich nach dem Verfahren von Anspruch 9, in dem der Kunststoff Poly(dimethyl-methyl-siloxan) ist, der zwei Radikal-Katalysatoren umfasst.

20. Verwendung eines Silkonkautschuks, der zwei bei verschiedenen Temperaturen reagierende Vernetzungskatalysatoren oder mindestens zwei verschiedene, eine Additionsreaktion bis zu verschiedenen Temperaturen hemmende Inhibitoren enthält, bei der Herstellung eines Hochspannungsisolators gemäß einem der Ansprüche 2 bis 17.

21. Verwendung nach Anspruch 20, wobei der Silikonkautschuk radikalisch vernetzbar ist und wobei die mindestens zwei Vernetzungskatalysatoren Radikal-Katalysatoren, insbesondere Peroxid-Katalysatoren, sind.

22. Verwendung nach Anspruch 20 oder 21, wobei der Silikonkautschuk Poly(dimethyl-methylvinyl-siloxan) enthält.

23. Verwendung nach einem der Ansprüche 20 bis 22, wobei ein Radikal-Katalysator mit einer niedrigeren Reaktionstemperatur Bis(2,4-dichlorbenzoyl)peroxid ist und ein Radikal-Katalysator mit einer höheren Reaktionstemperatur 2,5-Bis(tert.-butylperoxy)-2,5-dimethylhexan ist.

24. Verwendung nach Anspruch 20, wobei der Silikonkautschuk durch Additionsreaktion vernetzbar ist und mindestens einen Additions-Katalysator, insbesondere Platin-Katalysator, aufweist.

25. Verwendung nach Anspruch 24, wobei der Silikonkautschuk Poly(dimethyl-methylvinyl-siloxan) umfasst.

26. Verwendung nach Anspruch 25, wobei der Silikonkautschuk weiter ein Hydrogenmethylsiloxan, insbesondere Poly(dimethyl-hydrogenmethyl-siloxan) umfasst.

27. Verwendung nach einem der Ansprüche 24 bis 26, wobei die mindestens zwei Inhibitoren für die Additionsreaktion Vinyl-methyl-siloxan (1:3) und Ethinylcyclohexanol umfassen.

28. Verwendung nach einem der Ansprüche 20 bis 27, wobei ein Vernetzungskatalysator mit niedrigster Reaktionstemperatur oder ein Inhibitor mit der niedrigsten Anspringtemperatur dem Kunststoff in einer Menge zugesetzt ist, die nicht ausreicht, um den Kunststoff vollständig zu vernetzen.

29. Verwendung nach einem der Ansprüche 20 bis 28, wobei ein oder mehrere Vernetzungskatalysatoren mit höherer Reaktionstemperatur dem Kunststoff in einer Menge zugesetzt sind, die gerade ausreicht, um den Kunststoff zusammen mit dem Vernetzungskatalysator mit niedrigster Reaktionstemperatur vollständig zu vernetzen.

## Claims

1. Method for producing a non-cylindrical component comprising an elongated central solid or hollow body, a synthetic material shield layer and one or more synthetic material fins by the following steps:
- applying said synthetic material shield layer to said solid or hollow body by moulding or extrusion;
- moulding said synthetic material fins;
one or both of the synthetic material of said shield layer and the synthetic material of said fins being partly cross-linked and, if appropriate, the synthetic material of said shield layer or fins not partly cross-linked being substantially totally cross-linked,
- locating said fins at a predetermined site on said shield layer in a form-fitting manner; and
- totally cross-linking the thus formed assembly.

2. Method according to Claim 1 for producing a non-cylindrical component in the form of a high-tension insulator comprising an elongated central solid or hollow body (1), a synthetic material shield layer (6) and one or more synthetic material fins in the form of weathersheds (3) by the following steps:
- applying said synthetic material shield layer (6) to said solid or hollow body by moulding or extrusion;
- moulding said synthetic material weathersheds (3);
one or both of the synthetic material of said shield layer (6) and the synthetic material of said weathersheds (3) being partly cross-linked and, if appropriate, the synthetic material of said shield layer (6) or weathersheds (3) not partly cross-linked being substantially totally cross-linked,
- locating said weathersheds (3) at a predetermined site on said shield layer (6); and
- totally cross-linking the thus formed blank of said high-tension insulator.

3. Method according to Claim 1 or 2, wherein both the synthetic material of said shield layer and the synthetic material of said fins or weathersheds comprise silicone rubber.

4. Method according to any of Claims 1 to 3, wherein the synthetic material of said shield layer and the synthetic material of said fins or weathersheds are identical.

5. Method according to any of Claims 1 to 4, wherein both the synthetic material of said shield layer and the synthetic material of said fins or weathersheds comprise at least one cross-linking catalyst.

6. Method according to any of Claims 1 to 5, wherein said synthetic material to be partly cross-linked comprises at least two cross-linking catalysts which react at different temperatures.

7. Method according to Claim 6, wherein a cross-linking catalyst reacting at a lowest temperature is employed in an amount not sufficient to fully cross-link said synthetic material.

8. Method according to Claim 7, wherein one or more cross-linking catalysts reacting at a higher temperature are employed in an amount just sufficient to cause said full cross-linking following partial cross-linking.

9. Method according to any of Claims 3 to 8, wherein the synthetic material of said shield layer and/or the synthetic material of said fins or weathersheds comprise a synthetic material to be cross-linked by free radical catalysis, particularly poly(dimethylmethylvinyl siloxane) including at least one, preferably two free radical catalysts, particularly peroxide catalysts.

10. Method according to any of Claims 6 to 9, wherein a free radical catalyst having a lower dissociation temperature is bis(2,4-dichlorobenzoyl peroxide) and a free radical catalyst having a higher dissociation temperature is 2,5-bis(tert-butylperoxy)-2,5-dimethylhexane.

11. Method according to any of Claims 1 to 5, wherein one or both synthetic materials comprise a synthetic material to be cross-linked by addition reaction including at least one addition catalyst, preferably platinum catalyst, and at least one inhibitor for said addition reaction.

12. Method according to Claim 11, wherein said synthetic material to be cross-linked by addition reaction comprises poly(dimethyl-methylvinyl siloxane).

13. Method according to Claim 12, wherein said synthetic material to be cross-linked by addition reaction furthermore comprises a hydrogen siloxane, particularly poly(dimethyl-hydrogenmethyl siloxane).

14. Method according to any of Claims 11 to 13, wherein said synthetic material comprises at least two different inhibitors inhibiting an addition reaction up to different temperatures (starting temperatures).

15. Method according to Claim 14, wherein said at least two inhibitors comprise vinylmethyl siloxane (1:3) and ethynylcyclohexanol.

16. Method according to either of Claims 14 and 15, wherein an inhibitor having the lowest starting temperature is added in an amount not sufficient to fully cross-link said synthetic material.

17. Method according to any of Claims 1 to 16, wherein synthetic material seals for fittings applied to the end of said central solid or hollow body are applied in the same way as said weathersheds.

18. High-tension insulator comprising an elongated central solid or hollow body (1), a shield layer (6) of a synthetic material and one or more weathersheds (3) obtainable by the method according to any of Claims 6 to 8, 10 and 14 to 16 with reference to Claim 3.

19. High-tension insulator comprising an elongated central solid or hollow body (1), a shield layer (6) of a synthetic material and one or more weathersheds (3) obtainable by the method according to Claim 9, wherein the synthetic material is poly(dimethyl-methyl siloxane) comprising two free radical catalysts.

20. Use of a silicone rubber comprising two cross-linking catalysts reacting at different temperatures or at least two different inhibitors inhibiting an addition reaction up to different temperatures, in the production of a high-tension insulator according to any of Claims 2 to 17.

21. Use according to Claim 20, wherein the silicone rubber can be cross-linked by free radical catalysis and wherein said at least two cross-linking catalysts are free radical catalysts, particularly peroxide catalysts.

22. Use according to Claim 20 or 21, wherein the silicone rubber comprises poly(dimethyl-methylvinyl siloxane).

23. Use according to any of Claims 20 to 22, wherein a free radical catalyst having a lower reaction temperature is bis(2,4-dichlorobenzoyl peroxide) and a free radical catalyst having a higher reaction temperature is 2,5-bis(tert-butylperoxy)-2,5-dimethylhexane.

24. Use according to Claim 20, wherein the silicone rubber can be cross-linked by addition reaction and comprises at least one addition catalyst, particularly platinum catalyst.

25. Use according to Claim 24, wherein the silicone rubber comprises poly(dimethyl-methylvinyl siloxane).

26. Use according to Claim 25, wherein the silicone rubber furthermore comprises a hydrogenmethyl siloxane, particularly poly(dimethyl-hydrogenmethyl siloxane).

27. Use according to any of Claims 24 to 26, wherein said at least two inhibitors for the addition reaction comprise vinylmethyl siloxane (1:3) and ethynylcyclohexanol.

28. Use according to any of Claims 20 to 27, wherein a cross-linking catalyst having a lowest reaction temperature or an inhibitor having a lowest starting temperature is added to the synthetic material in an amount not sufficient to fully cross-link said synthetic material.

29. Use according to any of Claims 20 to 28, wherein one or more cross-linking catalysts having a higher reaction temperature are added to the synthetic material in an amount just sufficient to fully cross-link said synthetic material together with said cross-linking catalyst having a lowest reaction temperature.

## Revendications

1. Procédé de fabrication d'une pièce non-cylindrique, ayant un corps central massif ou creux, allongé, une enveloppe en matière synthétique et un ou plusieurs éléments de nervuration, en matière synthétique, comprenant les étapes suivantes :
- application de l'enveloppe en matière synthétique sur le corps massif ou creux, par coulée ou extrusion;
- conformation des éléments de nervuration en matière synthétique;
où la matière synthétique de l'enveloppe et/ou la matière synthétique des éléments de nervuration est, respectivement sont, partiellement réticulées et, le cas échéant, la matière synthétique partiellement non réticulée de l'enveloppe ou des éléments de nervuration est pratiquement complètement réticulée,
- les éléments de nervuration sont disposés sur l'enveloppe à un emplacement prévu, en faisant appel à une liaison à ajustement de formes; et
- l'assemblage ainsi formé est complètement réticulé.

2. Procédé selon la revendication 1 pour la fabrication d'une pièce non cylindrique, ayant la forme d'un isolateur haute-tension, ayant un corps central (1) plein ou massif, allongé, une enveloppe en matière synthétique (6), un ou plusieurs éléments de nervuration ayant la forme d'écrans (3) en matière synthétique, comprenant les étapes suivantes :
- application de l'enveloppe (6) en matière synthétique sur le corps plein ou massif, par coulée ou extrusion;
- conformation des écrans (3) en matière synthétique;
où la matière synthétique de l'enveloppe (6) et/ou la matière synthétique des écrans (3) est,respectivement, sont partiellement réticulées et, le cas échéant, la matière synthétique non partiellement réticulée, de l'enveloppe (6) ou des écrans (3), est pratiquement complètement réticulée,
- les écrans (3) sont disposés sur l'enveloppe (6) à un emplacement prévu; et
- le pré-produit d'isolateur haute-tension ainsi formé est complètement réticulé.

3. Procédé selon la revendication 1 ou 2, dans lequel, tant la matière synthétique de l'enveloppe, qu'également la matière synthétique des éléments de nervuration, respectivement des écrans, comprennent du caoutchouc au silicone.

4. Procédé selon l'une des revendications 1 à 3, dans lequel la matière synthétique de l'enveloppe et la matière synthétique des éléments de nervuration, respectivement des écrans, sont identiques.

5. Procédé selon l'une des revendications 1 à 4, dans lequel, tant la matière synthétique de l'enveloppe, qu'également la matière synthétique des éléments de nervuration, respectivement des écrans, contiennent au moins un catalyseur de réticulation.

6. Procédé selon l'une des revendications 1 à 5, dans lequel la matière synthétique à réticuler partiellement contient au moins deux catalyseurs de réticulation, réagissant à des températures différentes.

7. Procédé selon la revendication 6, dans lequel un catalyseur de réticulation, réagissant à une température minimale, est utilisé en une quantité ne suffisant pas pour réticuler complètement la matière synthétique.

8. Procédé selon la revendication 7, dans lequel un ou plusieurs catalyseurs de réticulation, réagissant à température élevée, sont utilisés en une quantité suffisant tout juste pour provoquer la réticulation complète subséquente à la réticulation partielle.

9. Procédé selon l'une des revendications 3 à 8, dans lequel la matière synthétique de l'enveloppe et/ou la matière synthétique des éléments de nervuration, respectivement des écrans, comprennent une matière synthétique ayant été réticulée par une catalyse des radicaux, en particulier comprennent du poly(diméthyl-méthylvynil-siloxane), contenant au moins un, de préférence deux, catalyseurs de radicaux, en particulier des catalyseurs au peroxyde.

10. Procédé selon l'une des revendications 6 à 9, dans lequel un catalyseur de radicaux, ayant une température de décomposition basse, est le bis(2,4-dichlorbenzoyl) peroxyde et un catalyseur de radicaux, ayant une température de décomposition plus élevée, est le 2,5-bis(tert.-butylperoxy)-2,5-diméthylhexane.

11. Procédé selon l'une des revendications 1 à 5, dans lequel une ou plusieurs matières synthétiques comprennent une matière synthétique réticulant par une réaction d'addition, matière synthétique contenant au moins un catalyseur d'addition, de préférence un catalyseur au platine et au moins un inhibiteur pour la réaction d'addition.

12. Procédé selon la revendication 11, dans lequel la matière synthétique réticulant par réaction d'addition comprend du (poly(diméthyl-méthyl-vinyl-siloxane).

13. Procédé selon la revendication 12, dans lequel la matière synthétique réticulant par une réaction d'addition comprend en outre un siloxane hydrogéné, en particulier du poly(diméthyl-hydrogène-méthyl-siloxane).

14. Procédé selon l'une des revendications 11 à 13, dans lequel la matière synthétique contient au moins deux inhibiteurs différents, empêchant toute réaction d'addition jusqu'à des températures différentes (températures de pré-vulcanisation).

15. Procédé selon la revendication 14, dans lequel les au moins deux inhibiteurs comprennent du vinyl-méthyl-siloxane (1:3) et de l'éthinylcyclo-hexanol.

16. Procédé selon la revendication 14 ou 15, dans lequel un inhibiteur, ayant une température de vulcanisation extrêmement basse, est ajouté en une quantité ne suffisant pas pour réticuler complètement la matière synthétique.

17. Procédé selon l'une des revendications 1 à 16, dans lequel des joints d'étanchéité en matière synthétique, pour des armatures montées à l'extrémité du corps central massif creux, sont appliqués de la même manière que les écrans.

18. Isolateur haute-tension, avec un corps central (1) massif ou creux allongé, une enveloppe en matière synthétique (6) et un ou plusieurs écrans (3), obtenu suivant le procédé selon l'une des revendications 6 à 8, 10 et 14 à 13, en se référant à la revendication 3.

19. Isolateur haute-tension ayant un corps central (1) massif ou creux, allongé, une enveloppe en matière synthétique (6) et un ou plusieurs écrans (3), obtenus selon le procédé de la revendication 9, dans lequel la matière synthétique est du poly(diméthyl-méthyl-siloxane), comprenant deux catalyseurs de radicaux.

20. Utilisation d'un caoutchouc au silicone, contenant deux catalyseurs de réticulation, réagissant à des températures différentes, ou au moins deux inhibiteurs différents, entravant une réaction d'addition jusqu'à des températures différentes, lors de la fabrication d'un isolateur haute-tension selon l'une des revendications 2 à 17.

21. Utilisation selon la revendication 20, le caoutchouc au silicone étant susceptible d'être réticulé par action sur les radicaux et les au moins deux catalyseurs de réticulation étant des catalyseurs de radicaux, en particulier des catalyseurs au peroxyde.

22. Utilisation selon la revendication 20 ou 21, le caoutchouc au silicone contenant du poly(diméthyl-méthylvinyl-siloxane).

23. Utilisation selon l'une des revendications 20 à 22, où un catalyseur de radicaux, ayant une température de réaction faible, est un bis(2,4-dichlorobenzoyl)peroxyde et un catalyseur de radicaux, ayant une température de réaction plus élevée, est un 2,5-bis(tert.-butylperoxy)-2,5-diméthylhexane.

24. Utilisation selon la revendication 20, où le caoutchouc au silicone est réticulable par une réaction d'addition et présente au moins un catalyseur d'addition, en particulier un catalyseur au platine.

25. Utilisation selon la revendication 24, où le caoutchouc au silicone comprend du poly(diméthyl-méthylvinyl-siloxane).

26. Utilisation selon la revendication 25, le caoutchouc au silicone comprenant en outre un méthyl siloxane hydrogéné, en particulier du poly(diméthyl-hydrogène-méthyl-siloxane).

27. Utilisation selon l'une des revendications 24 à 26, les au moins deux inhibiteurs, pour la réaction d'addition, comprenant du vinyl-méthyl-siloxane (1:3) et de l'éthinylcyclohexanol.

28. Utilisation selon l'une des revendications 20 à 27, où un catalyseur de réticulation à température de réaction extrêmement basse, ou un inhibiteur à température de vulcanisation extrêmement basse, est ajouté à la matière synthétique en une quantité ne suffisant pas pour réticuler complètement la matière synthétique.

29. Utilisation selon l'une des revendications 20 à 28, où un ou plusieurs catalyseurs de réticulation à température de réaction plus élevée sont ajoutés à la matière synthétique, en une quantité suffisant justement pour réticuler complètement la matière synthétique, conjointement avec le catalyseur de réticulation à température de réaction extrêmement basse.
